# EUROPEAN PATENT APPLICATION

(11) **EP 4 071 845 A1**
(43) Date of publication of application: **12.10.2022**
(21) Application number: 21167718.2
(22) Date of filing: 09.04.2021
(51) Int. Cl.: H01M 4/04, H01M 4/134, H01M 4/1395, H01M 4/38, H01M 4/62, H01M 4/02

(54) **ADVANCED PRE-LITHIATED HETEROFIBROUS MONOLITHIC WAFER-LIKE SILICON ANODE**

(71) Applicant: Theion UG, 10407 Berlin (DE)
(72) Inventor: SLAVIK, Marek, 92601 Sered (SK); STRAKOVA FEDORKOVA, Andrea, 04011 Kosice (SK); KAZDA, Tomas, 612 00 Brno (CZ); KNAAPILA, Matti, 2800 Kgs. Lyngby (DK)
(74) Representative: Jeck, Anton

(57) **Abstract**

The present invention relates to a negative electrode for the use in alkali-ion rechargeable battery where electrochemically active material is selected from the Group IV semiconductors, the active material forming a heterofibrous monolithic anode body, the anode body comprises at least 2 layers of aligned and/or stacked and/or interlaced fibers wherein the layers of fibers are spot-fused together at points of their physical contact and further over-lithiated by ex-situ anisotropic chemical and or electrochemical means forming a monolithic wafer-like self-standing over-lithiated alloying type anode where part of the lithium excess is subsequently depleted during forming artificial SEI-layer.

## Description

The present invention relates to advanced, preferably ex-situ (before cell assembly), pre-lithiated negative electrode (body) based on group IV semiconductors according to claim 1. Silicon anode as an alkali-ion battery and preferably to a lithium-ion secondary battery exhibiting self-standing heterofibrous wafer-like monolithic super structures with high degree of structural ordering.

Definitions of the invention are given after the "object of the present invention" for each aspect of the inventive anode.

From US20180331341A1 a spun silicon-based mat is known made from a mixture of a liquid silicon precursor and polymer, wherein lithium is introduced in the silicon matrix of the resulting nanotubes of the spun mat.

Due to the rapid growth of e-mobility sector together with portable smart electronic equipment, there are growing demands for advanced secondary batteries with higher energies as well as high charge rate acceptance which address the actual challenges originated from the users of BEV battery powered electric vehicles which request much higher operation radius on single charge and shortest charging time possible defined here as ≤ 30min from 15% SoC to 100% SoC (State of charge) with negligible negative effect on the cycle life defined as SoH (state of health) - The SoH indicates the ratio of the currently maximum usable capacity to the nominal capacity.

Li-ion battery with high cycle life and high charge rate acceptance is in direct conflict at least with the present types of alkali-ion anodes which are mostly based on Li+ intercalation reaction into graphite where slow Li+ diffusion on intercalation into graphite gallery together with the presence of concentration polarization gradient which further restrict accessibility of Li+ by hampering the transport rate of Li+ from electrolyte to anode which then exceeds Li diffusion-intercalation rate and induce accumulation of more charge carriers on the anode surface and drives the anode potential below 0 V which is the area where lithium plating is kinetically more favorable than Li+ intercalation reactions and as the working potential of graphite is close 0.1V a metallic Li deposition occurs and subsequently cell degradation and safety issues.

The growing sector of portable electronic device, recently, coinciding with the trend towards "small" and "compact" energy carriers hereby defined as batteries with desired high (>750 Wh/l) volumetric energy density, and "light" defined as batteries with desired high (>300 Wh/kg) gravimetric energy density are fulfilled by the inventive anode. There is mismatch in understanding the definition of "high energy battery" terminology where the most preferable demand to the battery is to have high gravimetric energy in Wh/kg but in reality its opposite a volumetric capacity Wh/I is more demanding due the fact that available space as example available space/volume for insertion of battery into the smartphone, notebook or in electric car platform those are the most limiting factors than weight so there is need of battery with both high volumetric and gravimetric energy density hereby defined as compact & lightweight battery.

Silicon as is one of the most promising type of anode for the post-lithium batteries which are based on alloying redox reactions with theoretical room temperature gravimetric/volumetric capacity in de-lithiated (discharged) state 3579 mAh/g, 8334 mAh/cm3 and lithiated Li3.75Si (charged) state 1857 mAh/g, 2193 mAh/cm3 while average discharge potential of 0.4 V vs. Li/Li+. Compared to the most common type of anode - graphite hereby defined as state-of-the-art anode used in commercial Li-ion cells is defined as gravimetric (graphite) 372 mAh/g vs. (silicon) 3579 mAh/g and volumetric (graphite) 837 mAh/cm3 vs. (silicon) 8334 mAh/cm3.

Lithium metal anode volumetric capacity in fully discharged state is 0 mAh/cm3 so all lithium was stripped down from e.g. a Cu foil during discharge and transferred towards the cathode. So lithium in fully charged state has a capacity of 2061 mAh/cm3 compared to silicon which has in fully discharged state a capacity of 8334 mAh/cm3 and fully lithiated - charged state 2193 mAh/cm3. So those numbers disclose advantages of using lithiated silicon anode instead of LMA (lithium metal anode). This is because theoretical volumetric fluctuation of lithium metal is 100% represented by average 0.205 mAh/cm2 per 1 micron of thickness. Thus, a LMA anode is dimensionally unstable. So on discharging (stripping) the thickness of lithium metal foil decrease where opposite on charging (plating) increase. In comparison to graphite which is the most commonly used anode material, all volumetric fluctuations during cycling of the inventive anode is compensated inside the internal voids/porosity (≈30% of the volume) of anode with only minor changes of anode thickness.

LMA foil is a host-less anode. Thus, in order to charge it large irreversible losses are present due the SEI (solid electrolyte interphase) formation but the most important factor is a lithium defragmentation and subsequently expansion of SEI layer which is even for use of advanced electrolytes 50% and progressively increasing on each cycling (lithium consuming). So totally the minimum theoretical volumetric fluctuation for LMA is now in best case scenario 150% vs. 276% for silicon but the real situation is different. LMA (foil) is preferably used in excess due to the Li+ consuming during cycling. So, when the all available Li+ is consumed the cell is dead.

In order to deal with cycle life in realistic Li-ion batteries with LMA commonly used excess is 200% so when we now compare theoretical volumetric capacity of silicon 2193 mAh/cm3 with the best possible scenario LMA foil with only 100% excess then its theoretical capacity is only half of it 1031 mAh/cm3 because of lithium excess within the anode/cell compartment represent dead weight/volume so its presence in battery is mainly because of compensating its consumption and enhance cycle life. Now when we compare realistic LMA anode 1031 mAh/cm3 with graphite and its volumetric capacity of 837 mAh/cm3 it's clear that if we add expansion contribution from SEI on LMA 50% it's evident that using claims like "lithium metal is holy grail of battery" it's just lack of understanding of the basic electrochemistry and cell-battery-module-pack-system.

Important factor for the solid state battery with LMA anode is a necessity of use specific device capable to provide uniaxial pressure over the battery module this is because LMA is dimensionally unstable so in order to exchange ions lithium metal foil needs to be hardly pressed against solid electrolyte which then result to additional dead weight/volume gain but this time not from the cell components but due the additionally auxiliary components related to battery module or pack and because of stack pressures in order of 10 Mpa such forces homogeneously distributed over the entire surfaces of realistic pouch cells would be a source of additional 18% lower energy content and also significant safety concern due the presence of pre-compressed battery modules within e.g. an electric car which during crash accident could release extreme energies present in such batteries.

In the scope of the previous analysis the inventive ex-situ pre-lithiated heterofibrous silicon anode with preferabvly an artificial SEI layer, having mixed ion-electron conductivity is a new and viable solution for the next generation batteries capable to accept high charge rates and realize ultra-compact batteries with capacities over 1200 Wh/I and 350 Wh/kg with Li-rich LLS cathode.

It's clear that the higher density of silicon would offer 10 times higher volumetric energy content than graphite but for the cost of high volumetric expansion on lithiation defined as (graphite) 11.2% and (silicon) 276% where the a challenge is the nature of silicon expansion which is a highly anisotropic process so the point of interaction/entering of electrons/ions into reaction with silicon and subsequently alloying reaction proceed different from the traditional intercalation type anode - graphite.

The low cost of silicon as second most abundant element in the Earth's crust (about 28% by mass) after oxygen together with high volumetric/gravimetric energy of Si offer significant benefits towards the use in next generation energy carriers - batteries. Si is a group IV type semiconductor with conductivity of 1.6x10-3 S/m and Li+ diffusivity of 1.9x10-14 cm2/s but the Li+ diffusion in Si proceeds by different speeds according to the Si crystal orientation and thus the direction is 3D while the critical force (1) in <100> and <111> orientation is about 40% and 15% lower than in <110>), which means that lithium atoms have the a preferred diffusion rate in <110> direction. Thus, this discrepancy in diffusion would result in fast capacity degradation due the non-uniform anisotropic expansion/contraction of the silicon at particle level and subsequently on electrode level because different rates of lithiation within the internal electrode structures where e- conduction paths are provided dominantly by physical interaction between active mass Si, binder and conductive additives where points of Si interaction with Li+ and e- would define the reaction kinetics and thus as Si anode cycling proceed by repeatable charge/discharge cycles the position of Si particles within the present anode structures isn't rigid so each shrink/expansion on subsequent cycling will redistribute internal ion/electron conduction paths which is due the presence of polymeric binder flexible. Thus, the point of interaction of silicon with e- always changes due the complex nature of slurry-based Si anode where active Si particles must interact with binder and conductive additives to create an electron and ion conduction path.

Present technological solutions of the silicon-based anodes are based on using Si as minor additive into existing slurry-based anodes where internal porosity of the anode is used to compensate volumetric fluctuation during cycling. Because of existing limitation originated from the preferential usage of slurry-based anode such volumetric changes are only partially compensated by internal voids of the anode where the most of the pressure build up within the anode is converted into mechanical forces which further destabilize structural connection between Si-graphite-binder-conductive additives. In a traditional silicon-based Li-ion batteries e- conduction path is provided by the interaction of silicon with billions of conductive nanoparticles which transport e- to and from the electrode. Because a morphological changes of silicon based anode occurs there isn't a steady state Li-Si alloying point so the direction from which lithium will enter into crystallographic structure of silicon while forming amorphous LixSi phase and the presence of local Si anisotropy will further results in deformation and subsequently redistribution of mechanical forces and finally cracking and delamination of Si structures which then exposes its surface into electrolyte and further consume available electrolyte and Li+ for creating new SEI layer(s) which leads to irreversible capacity loss as well as impedance gain resulting in evolving of excessive heat during cycling where the most limiting factor is fast charging rate (Solid Electrolyte Interphase layer).

To solve the above mentioned problems, **it is an object of the present invention** to provide a negative electrode - heterofibrous, lithiated silicon anode preferably exhibiting hierarchical electrode porosity, for an alkali-ion battery exhibiting an significantly improved cycle life, high coulombic efficiency, gravimetric and volumetric energy density, active mass utilization level and innovative production methods characterized as preferably solvent-free and/or binder-free and/or drying-free and/or slurry-mixing & degassing-free and/or slurry coating-free and/or anode current collector foils to tab welding-free and/or calender-free anode (and process of preparation) which together brings a high energy, cost efficiency and environmentally positive effect of such advanced silicon anode. High charge rate acceptance of heterofibrous, preferably anisotropically, lithiated, (preferably n-type) silicon wafer anode defined here at cell level as full charge of cell from 15% SoC to 100% SoC in preferably ≤12min would have global impact on the alkali-ion battery market. (Monolithic) Wafer may mean: self-standing heterofibrous silicon-based anode and/or unified anode body made from heterofibrous silicon material having preferably tailored hierarchical open porosity.

The task is solved according to the present invention by an anode according to claim 1.

In the scope of our invention we apply an innovative method for the producing of ex-situ pre-lithiated silicon structures of higher order - monolithic heterofibrous wafer which allow to finely tune the content of lithium within the silicon wafer to suit lithium free or lithiated cathode and where all subsequent processes are applied at the wafer level so all irreversible losses originated from SEI forming is compensated internally by ex-situ method.

Unevenly distributed lithiation or anisotropic lithiation of the layers comprise non-lithiated, deficiently lithiated and stoichiometrically lithiated areas.

Spot-funing means metallurgical bonds from Li-Group-IV-semiconductor-alloy and/or lithium or a mixture of the two, the layers are interconnected at multiple discrete points by the metallurgical bonds and the discrete points of interconnection are distributed across the anode body, hence over the whole area of the layers.

Spot-fusing at certain positions may additionally guide the subsequent distribution of LixSi in the anode during cycling controlling the way how LixSi will redistribute in the anode. The mechanical stress coming from cycles of lithiation and de-lithiation charging/discharging can therefore be distributed.

"Anisotropy" is a way how the deposition of Li in the anode as LixSi can be predicted and guided during further repeating charging/discharging cycles. It's like chassis of modern car in which structure engineers insert weak spots which further on accident will guide how the chassis will deform and absorb the energy from car crash. The spot fusing may do the same inserting weak spot into structurally rigid LixSi wafer.

The metallurgical bonds are preferably introduced by electrochemically induced Li fusing or introduction of molten lithium. Locations, distribution, shape, size and numbers of those fused spots can be extracted from the simulation of current distribution non-uniformity within LiXSi anode.

Tortuosity of the anode is directly linked to the accessibility of the straightest and shortest possible electron and ion conduction paths established for Li+ by electrolyte present within the internal voids of electrode and for e- direct physical interaction of active mass with conductive additives such as carbon black or conductive polymers and/or its combination with. Traditional slurry-based electrode lack of structural ordering which is crucial for obtaining efficient electron and ion paths while monolithic silicon anode with high degree of structural ordering defined as hierarchical structure which further consist from layers of aligned silicon fibers stacked into the monolithic anode structure is able to establish efficient paths. Monolithic silicon anode with ordered porosity replaces traditional mediated electron conduction paths characteristic for slurry-based electrodes which are based on direct physical contact between silicon, conductive agents, binder and current collector foil by the inventive direct lithium-fused fibrous low resistive heterofibrous silicon wafer. This type of open structure allows fast charging of the anode beyond the critical limit of the existing intercalation type anode present at 80 % SoC.

The artificial SEI layer may be made by the following steps.

Interconnected layers of Si-fibers are lithiated (over lithiated) to Li₂₁Si₅. Such lithiation may be conducted under elevated temperature preferably above 100°C under a protective solvent such as e.g. linear, branched or cyclic alkanes (Adv. Energy Mater. 2019, 1902116; DOI: 10.1002/aenm.201902116). Suitable solvents may be binary and or ternary mixtures of polar and non-polar solvent or solvents where more preferably non-polar solvent is hydrocarbon such as decane and polar solvent with boiling point > 130°C such as DEGDME diethylene glycol dimethyl ether.

The (over) lithiated Si-layers are then treated with dopants to form an artificial SEI layer, preferably in a maximum lithiated stated of the Si-anode. The reaction of the dopants with the lithiated anode reduces the lithium content. A stoichiometry of Li₁₅Si₄ may be reached by/after artificial SEI formation which is stable at room temperature. Since the SEI layer is induced artificially after the lithiation of the Si-Anode the aSEI layer has less imperfections (cracks, weak spots, thickenings,...) since there is only SEI formation at the end of the initial lithiation process and hence no volume expansion happens after SEI formations occurs (as it is the case if SEI is formed before or during initial lithiation process). The protective solvent prevents formation of the thick SEI layer at an earlier stage of/during lithiation.

SEI formation may be conducted in the protective solvent into which liquid/dissolved and/or gaseous dopant (e.g. As-, P-, (H)F-compounds) such as group V pnictogens or low concentration electrolyte are introduced. Upon contact of the dopant with the (over) lithiated Li₂₁Si₅, lithium reacts with the dopant forming a tailored (artificial) SEI layer containing e.g., Li₃P, Li₃As, Li₄As and/or LiF depending on the used dopant. After consuming part of the Li from Li₂₁Si₅ by reaction with dopant and/or dopants room temperature active alloy (such as Li₁₅Si₄) remains. If access dopant is present in the Si-layers those dopants will also react with the provided (excess) lithium of Li₂₁Si₅. Sie resulting artificial SEI layer experiences mixed ion-electron conductive properties. The amount of Dopant in the Si-Layer can be adapted to the amount of Li present in the Li₂₁Si₅ to Yield the desired Lithiation degree.

This method reduces the loss of Li during the initial formation of the SEI layer compared e.g., to the classical lithiation of the final battery by initial charging.

Common Li-ion cells contain a certain amount of lithium inserted/intercalated into NMC cathode which means that battery is in fully discharged state where all lithium is at the cathode side so in order to move Li⁺ from the cathode into the anode state of the art anodes need first charging but to do so high irreversible losses of Li need to be accepted during this process. The lost Li becomes a non-active part of the SEI layer and because of high reactivity of lithium thick highly resistive R_{SEI} (layer that forms on the interface between the electrode and electrolyte) is formed in the state of the art which also affect R_{ct} high charge transfer resistance (kinetics of electrochemical reaction). This common in-situ process uses only Li which is present in the cell as part of the energy storage matrix. In case a Si-anode is lithiated in-situ such as by mixing of suitable Li precursor capable to be part of the slurry or to be sprayed over the surface of electrode to be lithiated and subsequently activated by calendering which crack the protective layer of SLMP as "2010 DOE Vehicle Technologies Program Review" P.I. Marina Yakovleva Co-P.I. Dr. Yuan Gao FMC June 8th, 2010 (https://www.energy.gov/sites/prod/files/2014/03/f11/es011 yakovleva 2010 o.pdf) and in-situ lithiated electrode will lead to a super expensive method since building a protective layer over the micronized lithium metal powder introduced ex-situ during cell assembly but activated subsequently.

In contrast the preferred ex-situ introduced lithium which was supplied externally can be a. provided in access and b. provides a uniform SEI layer with little to none cracks, weak spots, thickenings,... since formation of the SEI layer is conducted in a maximum expanded state (by volume) a.i. (over) lithiated state of the anode - Li₂₁Si₅. This method may also avoid inclusions of SEI layer material inside the LiₓSi body.

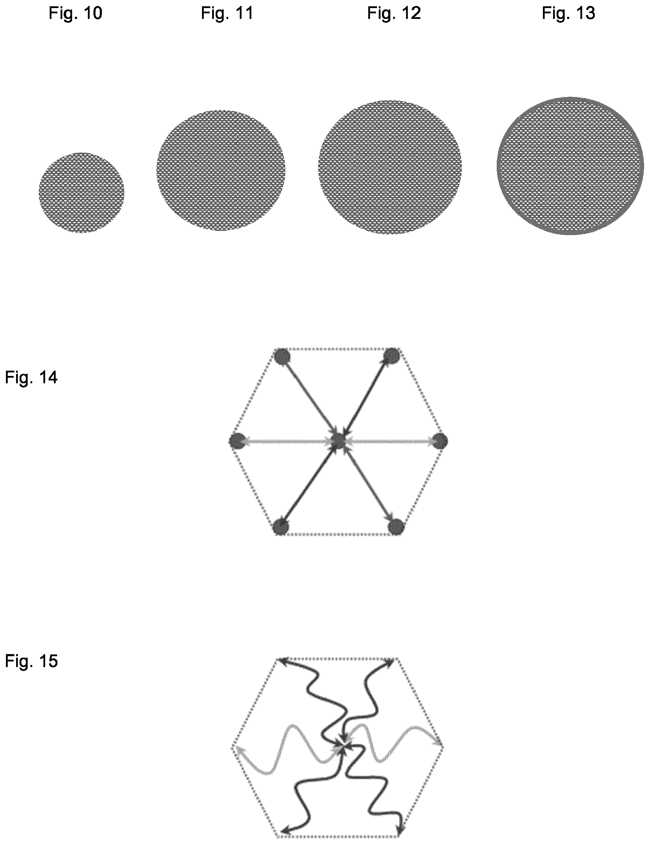

Traditionally existing silicon-based anodes are based on intrinsic silicon where nanoparticles have various shapes such as 0D, 1D or more complex 3D host structures for silicon or micro-meso porous 3D silicon or etched silicon wafer. Where for 0D silicon particles having under critical diameters which prevents particles to rupture during lithiation (expansion) is having protective carbon coating on its surfaces where such coating is more preferably carbon where this type of protective coating represent barrier for lithium initiated self-fusing of surrounding silicon structures in close physical contact where for traditional silicon anodes protective coating based on partial oxidation of the surface of silicon and or carbon coating those processes are applied to deal with pyrophoric nature of nano-sized silicon particles and ability to be processed as slurry with suitable solvent without significant side reaction. The presence of barrier layers between silicon particles in slurry-based electrode doesn't allow lithium to efficiently propagate self-fusing process over the full electrode. Slurry based silicon electrodes keep their internal electron conduction paths dominated by physical contacts between active mass particles - silicon and surrounding particles, conductive additives such as 1D shape as CNT and or 0D as carbon black and polymeric binders where our invention of heterofibrous anisotropically pre-lithiated monolithic silicon anode use preferably advantageous lithium initiated self-fusing process of silicon to build innovative fully interconnected monolithic 3D wafer-like anode. Preferably physical contacts mediated by conductive additives and polymeric binders typical for slurry-based silicon anode are completely eliminated by (full) metallurgical bonds/joints created by fusing lithium with cross-contacted silicon fibers and/or where pre-lithiation, artificial SEI (Fig. 13)

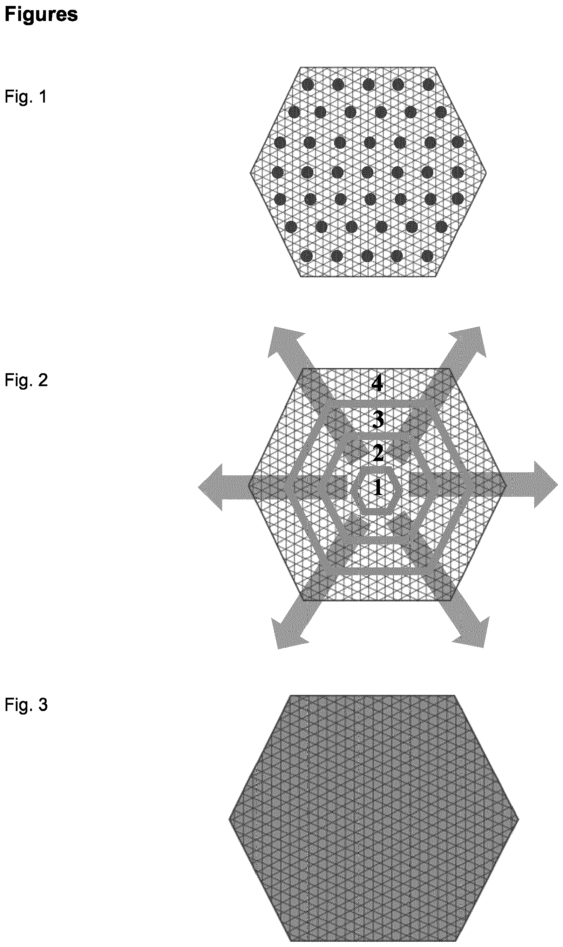

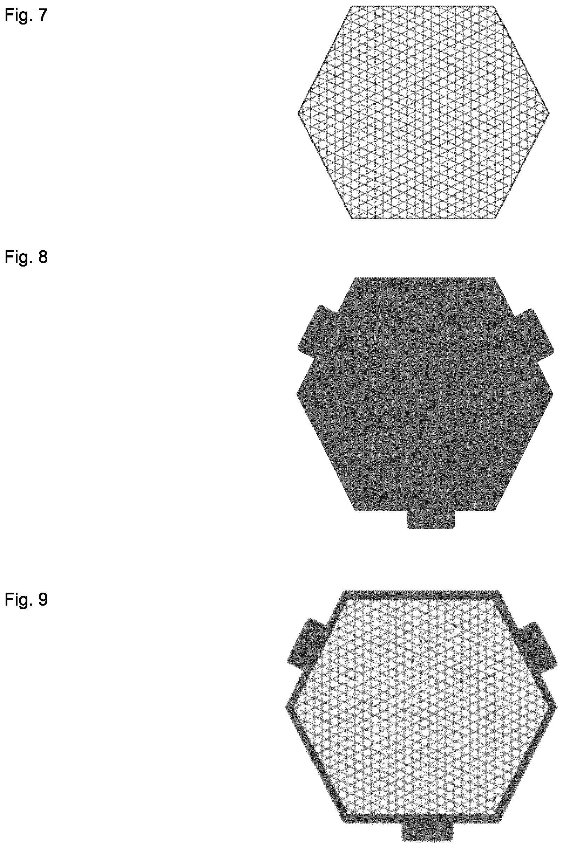

In some embodiment an additional object of the invention is an engineered heterofibrous monolithic silicon wafer with functional anisotropy represented by the introduction of specific areas fig. 7 into monolithic silicon body which further comprises combinations of structurally rigid (fused parts of the lithiated layers) and weak spots (non-lithiated and or partially lithiated and or fully lithiated and or over-lithiated parts of the layers). They together may form an engineered electrode superstructure capable to re-distribute volumetric fluctuation of silicon by allowing weak areas to absorb and redistribute it. Those areas may preferably be oriented in plane of electrode to accommodate volumetric changes and re-distribute it, preferably according pre-defined direction where rigid spots are preferably oriented out of plane and interconnect silicon layers. The spots may also add high degree of structural strength and partial flexibility to deal with silicon anisotropy on cycling. Additionally to the (anisotropic) fusing spots fig. 7 preferably an anisotropically aligned Si-Li alloy-pattern is provided on and within the wafer-structure/layer structure/Si-fibers with preferably lithiated parts distributed over the total wafer/layer structure and non-lithiated or Li deficient parts in the first process step distributed over the total wafer/layer structure at the same time (see fig. 2 for example). Such alignment may also be called functional anisotropy by lithiation and forming Li-Si alloy with structural aka. flexural modulus gradient between spot-fused pillars. Lithiation may generally be established by a print-fuse method with liquid lithium and/or its alloys and/or electrochemical lithiation and/or its combination where more preferential it's a two-step lithiation.

According to one embodiment the present invention is directed to a negative electrode for the use in an alkali-ion rechargeable battery, wherein the electrochemically active material of the anode is selected from the Group IV semiconductors. The active material is provided as a heterofibrous wafer-like self-standing monolithic anode body. The anode body comprises at least 2 layers of aligned and/or stacked and/or interlaced fibers which are spot-fused together by the presence of lithium at multiple discrete points of their physical contact forming individual Li-Group-IV-semiconductor-alloy (e.g. LiSi-alloy) bonds between the layers. Alternatively, or additionally to the spot fusing the anode body, in particular the layers, are anisotropically lithiated. The spot fusing may at least in one aspect of the present invention represent at least a part of the anisotropic lithiation. The anode as mentioned above may contain additional lithium, at least in a charged state, within the anode body which may not necessarily be involved in the bonding of the layers. This additional lithium may be present as e.g. charge carrier, preferably within the individual layers.

It is an objective of the invention to introduce an innovative method how to efficiently deal with the volumetric fluctuation of the silicon-based anode by introducing strategically positioned weak and rigid spots - structures which together work in synergy. This might be visualized in a similar manner as structural weak spots originally placed into chassis of a car by engineers to save life by absorbing impact forces during auto-crash and convert it into mechanical deformation of the chassis and surrounding structural parts of car. Weak spots may also be called expansion/shrinkage zones into which the anode material may expand during the lithiation (charging) and shrink on delithiation (discharging).

It is a preferred objective of the invention to introduce structural and/or material anisotropy represented by a variation of anode density caused by lithiation (and/or lithium alloy formation) in the heterofibrous silicon wafer and/or electrical anisotropy represented by the conductive (lithium, lithium alloy) lines, dots, arears, pillars (in total hereby called pillars, see e.g. Fig. 2) pillars preferably oriented perpendicularly to the electrode base (to the direction of extension of the silicon fiber layers).

In some embodiment an additional object of the invention is a production of well aligned and/or interlaced and/or stacked self-standing layers comprising (preferably consisting of) silicon nano or microfibers and or silicon nano or micro rods, thus crystalline and our amorphous and or poly-crystalline silicon, preferably from suitable hydrogenated silicon precursors which are preferably liquids within the operating window of nano and or micro fibrous production apparatus, preferably defined between m.p. -55°C to b.p. 420°C. Silicon precursors include, but are not limited to cyclic silanes (SinH2n, where n > 3) e.g. cyclohexasilane Si6H12, (m.p. +16.5, b.p. +226°C) or acyclic silanes (SinH2n+2 where n>3) such as hexasilane Si6H14 (m.p - 44,7°C to +b.p. 193.6°C). The general concept how to convert silanes into crystalline silicon and thus fibers can be found e.g. in ACS Applied Materials and Interfaces, Journal Volume: 4; Journal Issue: 5; Journal ID: ISSN 1944-8244. According to a preferred embodiment, the Si precursor also carry dopant and or dopants which is/are crosslinked with the Si precursor e.g. forming a co-polymerized Si/dopant solution prior to a fiber spinning process or growing Si rods, wires having nano and or microdimensions.

According to previous embodiment a suitable liquid silicon precursor could also be poly(silanes) such as dimethyl-polysilane (DMPS), deca-phenyl-penta-silane (DPPS) and poly-methyl-phenyl silane (PMPS) and/or suitable n-type dopant could be phosphorus bromine PBr3

Another object is a spot-fusing of the resulting monolithic heterofibrous silicon anode e.g. initiated by the alloying reaction between lithium and/or binary lithium alloy and or ternary lithium alloy and or lithium salt. A suitable solvent for alloying Li with Si and capable to solubilize lithium salt where more preferably lithium salt is LiTFSI and suitable solvents are e.g. binary and or ternary mixture of polar and non-polar alkane solvent where more preferably non-polar solvent is hydrocarbon such as decane and polar solvent is diethylene glycol dimethyl ether where boiling point of solvents is higher than 130°C and where molarity of LiTFSI within the electrolyte is ≤ 0.75 M where more preferably 0.25 M. Preferably pre-lithiation is introducing structural lithium (e.g. Dots/ lines - Fig. 1, 2, 3) before setting up a battery so pre-lithiated silicon anode is a structure which contain lithium and/or Li-Si alloy.

According to an embodiment of the previous objects this invention includes environmentally positive electrode which is fabricated from a slurry free process and/or is not based on an anode material slurry and/or binder free and/or drying free and/or calender free manufacturing methods

According to an embodiment of the invention a negative electrode - heterofibrous silicon anode is provided where selected active material is heterofibrous ex-situ pre-lithiated and/or where the content of silicon in anode is ≥ 72% per wt. more preferably a 92% where more preferably the state of silicon anode pre-lithiation depends on the content of available lithium in cathode where together forming a well-balanced Li-ion cell.

According to an embodiment of the invention a negative electrode - heterofibrous silicon anode is provided where the size of fibers/rods/wires/tubes is between 120nm - 15µm and where thickness of the heterofibrous silicon wafer like anode is between 10 µm to 800 µm.

According to an embodiment of the invention a method of preparation of a negative electrode - heterofibrous silicon anode is provided where silicon fibers are prepared from silicon precursor preferably with suitable dopant and/or dopants, preferably form a homogeneous mixture which is preferably partially co-polymerized prior to entering a fiber forming process.

The present invention may also be directed to a negative electrode for the use in an alkali-ion rechargeable battery, wherein an electrochemically active material of the anode is selected from the Group IV semiconductors characterized in that the active material is provided as a heterofibrous wafer-like self-standing monolithic anode body, wherein the anode body comprises at least 2 layers of aligned and/or stacked and/or interlaced fibers which are spot-fused together at multiple discrete points by individual Li-Group-IV-semiconductor-alloy and/or lithium bonds between the layers and that the anode body, in particular the layers, are anisotropically lithiated.

According to an embodiment a novel safety improving concept fig. 9 of using beneficial anisotropic properties of 2D graphene foil aka paper is provided such as higher thermal and electronic conductivity in-plane direction than through plane so such netshaped graphene current collector foil fig. 8 with integrated current collector tab and or tabs which mimics the shape of electrode fig. 7 due the anisotropy allow to efficiently remove and redistribute electron as well as hb eat from or to cell.

Fig. 10-13 depict model-like the influence of Lithium on the active mass material of the anode during construction of the anode.

Fig. 14 and 15 depict the influence of lithiation an delithiation on the structure of the anode layers (structural expansion and shrinking of the layers) between the fusingspots in particular according to claim 1.

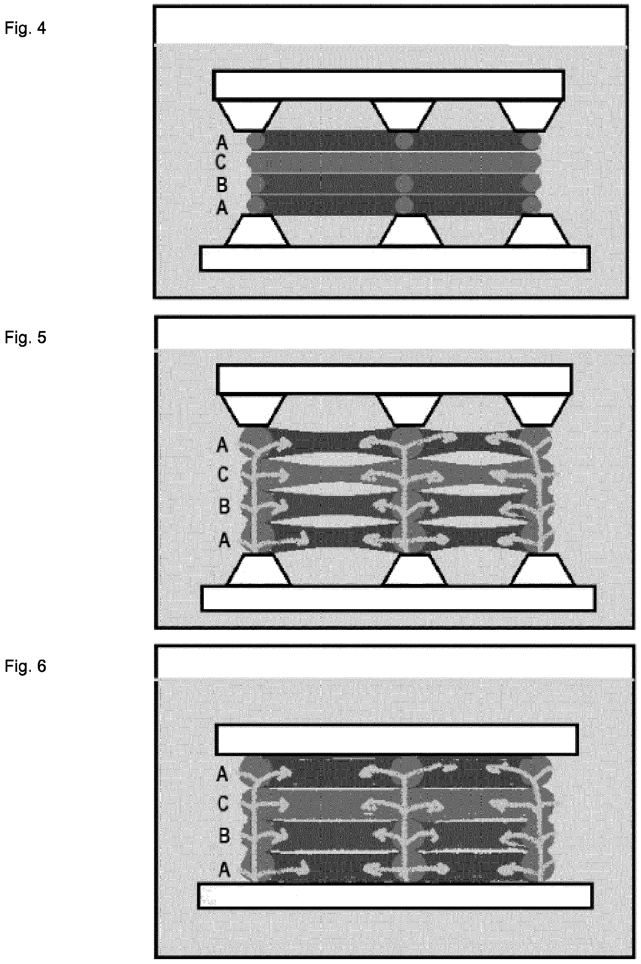

Preferably the monolithic, wafer-like self-standing architecture further comprises at least 2, preferably at least 3 hetero-fibrous silicon layers stacked and/or interlaced Fig. 4, 5 between each layer wherein preferably such silicon structure is subsequently convertible into a monolithic body by lithiation Fig. 6.

The present invention may also be directed to a negative electrode for the use in an alkali-ion rechargeable battery, comprising an electrochemically active material of the anode and/or the active material is selected from the Group IV semiconductors and/or the active material is provided as a heterofibrous wafer-like self-standing monolithic anode body and/or the anode body comprises at least 2 layers of aligned and/or stacked and/or interlaced fibers and/or the layers are spot-fused (Fig. 1 and/or 2 and/or 3) together at multiple discrete points by individual Li-Group-IV-semiconductor-alloy and/or lithium bonds and/or the layers are spaced apart from each other, preferably by the spot-fused bonds and/or the spot fused bonds are oriented in an out-of-plane direction with respect to the layer plane of extension, and/or the part of the layers which are outside of the spot-fused bond are free to move and/or expand within in-plane direction, and/or the anode body, in particular the layers, are anisotropically lithiated. Preferably the anode body has an artificial ex-situ SEI layer over the entire surface of wafer.

According to an embodiment of the invention a method of producing a negative electrode - heterofibrous silicon anode where anisotropic (over)-lithiation of silicon fiber layers is provided by a molten lithium print-fusing method preferably within the temperature range of 45°C - 750°C via a melt printer and/or lithium dispenser, wherein the melt-printer head preferably follows a pre-defined trajectory to create functional anisotropy (anisotropic lithiation) at the anode defined as patterns or spots.

According to an embodiment of the invention a method of producing a negative electrode - heterofibrous silicon anode where anisotropic (over)-lithiation of the silicon fiber layers is provided by an electrochemical method preferably within the temperature range of suitable lithium electrolyte 100°C to 250° in which the whole silicon wafer is immersed. Glass, ceramic and or glass-ceramic sheet of solid-state electrolyte may divide operating pre-lithiation chamber into two independent cathode/anode compartment which allow to use various types of suitable Li+ sources such as molten lithium metal and or thick lithium metal foil and or liquid lithium rich donor electrolyte such as Li2S6 in organic solvents and or Li2SO4 in polar protic solvent such as water and Cu2+ sacrificial electrode.

According to an embodiment of the invention a method of producing a negative electrode - silicon anode is provided, wherein the silicon fiber layers and/or the printer head is/are immersed into liquid processing medium(s). Preferably, each print-fusing head/nozzle are electrically connected to monitor local spot-area resistivity of Si wafer and/or to monitor pressure build-up during expansion occurring by pre-lithiation where those parameters is used in such way that well balanced spot-fused points is made. This allows safer and faster lithiation of Si along the printer/dosing heads/nozzles trajectory or spot printing/fusing. Preferably Li spot printing/fusing interconnects the individual Si fiber layers while as droplets of molten lithium preferably going up through the layers of silicon during the spot-fusing process.

According to an embodiment of the invention a method of ex-situ pre-lithiation (preferably in the first stage) negative electrode - heterofibrous silicon anode is provided wherein the flow of molten lithium towards the solvent immersed silicon layers is against gravity - defined as floating inside a suitable processing liquid, such as hydrocarbons as outlined above which is compatible with molten lithium and where the density of such liquid is ≥ 0.65 g/cm3, thus higher than the density of the molten lithium.

Preferably according to the present in invention a negative electrode for the use in alkali-ion rechargeable battery is claimed where electrochemically active material is selected from the Group IV semiconductors, the active material forming a heterofibrous monolithic anode body, the anode body comprises at least 3 layers of aligned and/or stacked and/or interlaced fibers.

## Claims

1. A negative electrode for the use in an alkali-ion rechargeable battery, comprising
- an electrochemically active material of the anode
- the active material is selected from the Group IV semiconductors
- the active material is provided as a heterofibrous wafer-like self-standing monolithic anode body,
∘ the anode body comprises at least 2 layers of aligned and/or stacked and/or interlaced fibers
∘ the at least two layers are arranged parallel on top of each other
∘ the layers are interconnected at multiple discrete points by metallurgical bonds
∘ at the discrete points of interconnection Li-Group-IV-semiconductor-alloy and/or lithium or a mixture of the two is provided as the metallurgical bond material,
∘ the discrete points of interconnection are distributed across the anode body, hence over the whole area of the layers
∘ the layers are spaced apart from each other, preferably by the material of the discrete points of interconnection
∘ the metallurgical bonds extend in an out-of-plane direction with respect to the individual layers,
∘ the part of the layers which are outside of the discrete points of interconnection are free to move and/or expand within in-plane direction,
- the anode body, in particular the layers are unevenly lithiated with non-lithiated, deficiently lithiated and stoichiometrically lithiated areas.

2. Negative electrode according to claim 1
**characterized in that**
the anode body has an artificial ex-situ introduced SEI layer over the entire surface of wafer which is provided in a lithiated state of the anode, preferably higher than Li₁₅Si₄, more preferably at a Li₂₁Si₅ state.

3. Negative electrode according to claim 1 or 2
**characterized in that**
the Group IV semiconductor is silicon or comprises silicon.

4. Negative electrode according to any of claim 1 to 3
**characterized in**
**that** at the discrete points of interconnection of the layers a stoichiometric access of lithium is located with respect to the amount of lithium needed to form a Li-Group-IV-semiconductor-alloy within the metallurgical bond.

5. Negative electrode according to any of the preceding claims **characterized in**
**that** the length of fibers is between 120nm - 15µm and where thickness of the heterofibrous silicon wafer like anode is between 10 µm to 800 µm.

6. Negative electrode according to claim 1
**characterized in**
**that** the individual Li-Group-IV-semiconductor-alloy bonds, thus the discrete points of interconnection, are provided as placeholders between the layers such that the layers experience at least partially a void between them at least in a discharged state, wherein the voids are at least partially filled with the active material in a charged state of the anode.
